# EUROPEAN PATENT APPLICATION

(11) **EP 4 044 281 A1**
(43) Date of publication of application: **17.08.2022**
(21) Application number: 21157032.0
(22) Date of filing: 15.02.2021
(51) Int. Cl.: H01M 4/36, H01M 4/58, H01M 10/0525, H01M 4/64, H01M 10/054, H01M 4/02

(54) **BATTERY CELL WITH AN ANODE COMPRISING GALLIUM NITRIDE NANOCRYSTALS**

(71) Applicant: Epinovatech AB, 223 63 Lund (SE)
(72) Inventor: OLSSON, Martin, Andreas, 223 63 Lund (SE)
(74) Representative: AWA Sweden AB

(57) **Abstract**

There is provided a battery cell (100). The battery cell comprising an anode current collector layer (110); an anode coating layer (120) arranged on the anode current collector layer (110), the anode coating layer comprises a plurality of Gallium Nitride, GaN, nanocrystals (130) and a first conductive binder (140); an electrolyte layer (150) arranged in the anode coating layer (120); and a cathode current collector layer (1100) coated with a cathode coating layer (170), the cathode coating layer (170) comprises a plurality of transition metal oxide nanocrystals (180) and a second conductive binder (180).

## Description

### Technical field

The present invention relates to a battery cell. Especially, a with an anode comprising Gallium Nitride, GaN, nanocrystals

### Background

Lithium-ion battery technologies, with their high charge capacity levels and rechargeability, have evolved storage of electrical energy and played a significant part in enabling mobile electronic devices such as portable computers and telephones. Lithium-ion batteries have also been of importance for the resurgence of electric vehicles. However, the by now conventional lithium-ion battery technology comes with its own range of issues. For electrification of transportation, a large energy density within the battery is needed to be able to compete with fossil fuels. Further, batteries used for electric vehicles must have a long lifetime and cannot fade too quick during charging and discharging.

Both the energy density and the fading capacity of a battery can be connected to the anode of the battery. Improvements have been made by using graphite as an anode in lithium-ion batteries. Further, silicon is also provided as an anode material. However, both graphite and silicon come with its drawbacks when used as anode materials. Moreover, sodium ion batteries are presented as an alternative to lithium ion batteries. But also, for the sodium ion batteries there are drawbacks.

Thus, there is a need for improvements within the technical field.

### Summary of the invention

An object of the present invention is to at least mitigate some of the aforementioned issues and to provide a battery cell that enable improved battery charge capacity, faster charging and less battery wear.

According to an aspect of the present invention, there is provided a battery cell. The battery cell comprising:
an anode current collector layer;
an anode coating layer arranged on the anode current collector layer, the anode coating layer comprises a plurality of Gallium Nitride, GaN, nanocrystals and a first conductive binder;
an electrolyte layer arranged in the anode coating layer; and a cathode current collector layer.

Such a battery cell may mitigate some of the issues in the prior art. Gallium nitride, GaN, nanocrystals in the anode coating layer may be advantageous for increasing the storage capacity for e.g. lithium-ion based batteries or sodium-ion based batteries. This is due to the large surface area of GaN nanocrystals, providing a larger contact area with the electrolyte. This improves the diffusion rate by giving a reduced path length as well as improving the rate of electron transportation through the GaN material. In addition, the lithium diffusivity is up to 14 times faster, which may improve the capability for faster charging. The electron configuration of gallium (Ga) is [Ar] 3d¹⁰4s²4p¹ as compared to that of silicon which is [Ne] 3s² 3p². The n/M ratio for GaN is high with 10 electrons in the 3d-subshell and one electron in the 4p-subshell, for 83,73 g/mol i.e. ∼ 0,12 e⁻ mol/g. In comparison, the n/M ratio for silicon is 2 electrons in the 3p-subshell for 28 g/mol, i.e. ∼ 0,07 e⁻ mol/g. The electronegativity of d-electrons from gallium contributes to a higher chemical potential and higher standard reduction potential. The electronegativity difference of GaN is 1.8, with the electronegativity of Ga as 3.0 and electronegativity of N as 1.2. Hence, this is the same electronegativity as that of silicon at 1.8. The cell potential of lithium-ion batteries with GaN nanocrystals in the anode coating layer is 3.7-4 V, which is similar to conventional lithium-ion batteries, making GaN nanocrystals industrially applicable in practical battery cells. Further, in comparison to silicon anodes, anodes with GaN nanocrystals in the anode coating layer are orders of magnitude more wear resistant than silicon. Additionally, GaN nanocrystals are electrochemically more stable as compared to graphite which is theoretically unstable. The electrochemical stability of GaN is comparable with silicone. The battery cell may be cylindrical, prismatic, coin or a pouch.

The plurality of GaN nanocrystals may have a diameter less than 100 nm. Such small size GaN nanocrystals may shorten the path length of the ions, drastically increasing the rate capability for faster charging of the battery cell. This is due to the high surface to volume ratio of GaN nanocrystals.

The plurality of GaN nanocrystals may be p-doped. The plurality of GaN nanocrystals may alternatively be be n-doped. The doping may be made in-situ during epitaxial growth in a MOCVD reactor tool. The use of intrinsically or in-situ doped GaN nanocrystals may increase the conductivity of the GaN nanocrystals, further improving the storage capacity.

The plurality of GaN nanocrystals may be nanowires which are elongate in a C-direction of wurtzite. The term "nanowire" may refer to elongated structures with a dimension such as a diameter or a length on the nanometer scale, i.e. 1-100 nm. During lithiation below 100 nm GaN may be substantially beneficial due to its wear resistance close to diamond, the hardest material that is known. In comparison, silicon nanoparticles undergo pulverization and hence must typically be made larger than 150 nm in diameter for stability. Nanowires may be simple and substantially one-dimensional or contain, along its length, at least one node from which at least two separate branches extend. GaN nanocrystals in the form of nanowires may increase the contact area with the electrolyte and hence also further increase the conductivity of the electrolyte and thus the storage capacity as well as the charging rate of the battery.

The cathode coating layer may comprise sodium metal oxide.

The cathode coating layer may comprise lithium metal oxide.

The electrolyte layer may comprise trimethyl phosphate.

The electrolyte layer may comprise lithium salt.

The electrolyte layer may comprise sodium salt.

The first conductive binders may comprise a conductive polymer, selected from the group comprising trans-polyacetylene, polythiophene, polypyrrole, poly(p-phenylene), polyaniline and poly(p-phenylene vinylene).

The cathode current collector layer may be coated with a cathode coating layer. The cathode coating layer may comprise a plurality of transition metal oxide nanocrystals and a second conductive binder.

The second conductive binder may comprise a conductive polymer, selected from the group comprising trans-polyacetylene, polythiophene, polypyrrole, poly(p-phenylene), polyaniline and poly(p-phenylene vinylene).

The battery cell may further comprise a separating layer. The seperating layer may be arranged inbetween the electrolyte layer and the cathode coating layer.

The separating layer may comprise a nanoporous block copolymer. The term "nano-porous" may refer to pores in the block copolymer with a dimension such as a diameter on the nanometer scale, i.e. 1-100 nm.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for purpose of describing particular embodiments only and is not intended to be limiting.

It must be noted that, as used in the specification and the appended claims, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects of the present invention will, in the following, be described in more detail with reference to appended figures. The figures should not be considered limiting; instead they should be considered for explaining and understanding purposes.

As illustrated in the figures, the sizes of layers and regions may be exaggerated for illustrative purposes and, thus, are provided to illustrate the general structures. Like reference numerals refer to like elements throughout.

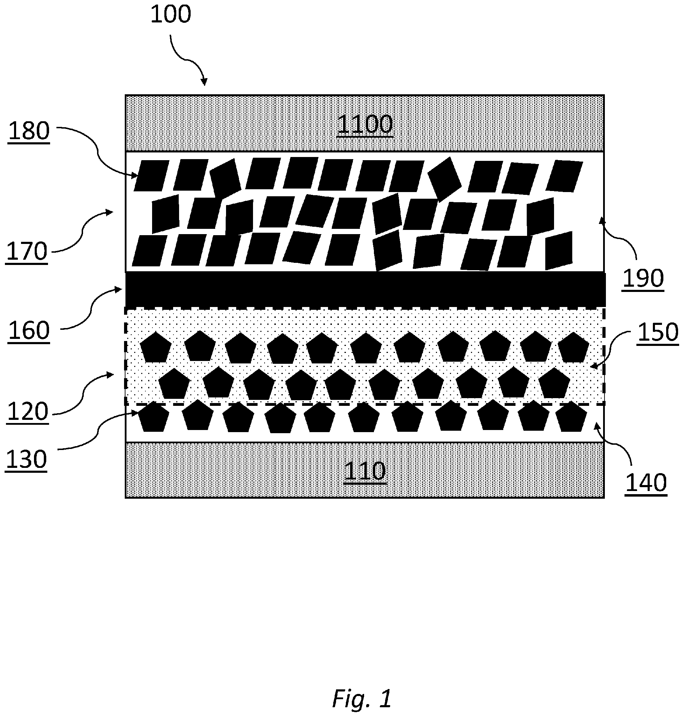

Fig. 1 shows a cross section of a battery cell.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

Fig. 1 shows a cross sectional view of a battery cell 100. The battery cell 100 may be cylindrical, prismatic, coin or a pouch. The battery cell 100 comprising an anode current collector layer 110, an anode coating layer 120, an electrolyte layer 150 and a cathode current collector layer 1100. The battery cell 100 may further comprise a separating layer 160. The cathode current collector layer 1100 may be coated with a cathode coating layer 170.

The layers of the of the battery cell 100 may be arranged in a laminate fashion one on top of the other. Hence, the layers of the battery cell 100 arranged above each other in a stack. In other word, the layers of the battery cell 100 arranged above each other in a vertical direction. The vertical direction may be substantially perpendicular and normal to the surfaces of the layers of battery cell 100. The word "comprises/comprising" throughout this disclosure refer to layers and structures at least partially comprising a certain material. The word "comprises/comprising" does not exclude the layer from containing impurities of other materials nor does it exclude the layer or structure substantially consisting of the comprised material.

The anode current collector layer 110 may comprise copper. For example in the form of a copper foil. It should be understood that the choice of anode current collector 110 material should be selected with respect to the HOMO-LUMO energy gap. The anode current collector 110 material must be chosen such that the chemical potential µ_{A} lies below the LUMO.

The anode coating layer 120 is coated on the anode current collector layer 110. Hence, the anode coating layer 120 is arranged on the anode current collector layer 110. The anode coating layer 120 comprises a plurality of GaN nanocrystals 130 and a first conductive binder 140. The anode coating layer 120 may comprise a loading of 30-50 weight percent of GaN nanocrystals. The GaN nanocrystals 130 are mixed with the first conductive binder 140. The plurality of GaN nanocrystals 130 may have a diameter of less than 100 nm. The GaN nanocrystals 130 may be p-doped or n-doped. The n-doped GaN nanocrystals may be beneficial for conducting electron charge carriers for the negatively charged anode, and p-doped GaN may require annealing to remove excess hydrogen inside the GaN material. The use of intrinsically or in-situ doped nGaN nanocrystals of 1-100 nm may increase the electron mobility in GaN nanocrystals beyond the lower electron mobility of silicon 1000 cm²/ (V·s), further improving the charging and discharging behavior of the battery cell. Further, the GaN nanocrystals 130 may be platelets, e.g. having thickness of 1-10 nm. The surface of the GaN nanocrystals may be passivated by hydrogen atoms. The GaN nanocrystals may be nanowires. The nanowires may elongate in the C-plane of wurtzite having the most polar surface of the material. The first conductive binder 140 may be a conductive polymer. For example, the first conductive binder may be anyone of trans-polyacetylene, polythiophene, polypyrrole, poly(p-phenylene), polyaniline and poly(p-phenylene vinylene).

Nitride materials other than GaN are Si₃N₄, SiN_{0.73}, SiNP, VN, Co₃N, Cu₃N, Fe₃N, CrN, Ni₃N, Mn₄N, C₃N, TiN, and Sb₃N. In contrast to these other nitride materials, GaN may be produced as a crystalline material by epitaxial growth on a substrate such as sapphire or silicon with large scalability and mature process methodology up to ∼ 1 micron thin films per hour. Growth of GaN nanocrystals from wet-chemical methods renders amorphous GaN that pulverize in polar solvent such as water or may pulverize in polar electrolyte. GaN nanocrystals may be formed by exfoliation of epitaxial GaN, i.e. grown on a substrate such as silicon. Laser ablation may be used to create nanocrystals from the GaN thin-film. The production of GaN from ammonia and a gallium precursor such as trimethyl gallium is an eco-efficient way to manufacture an anode material for a battery. Using laser ablation of GaN thin-films to form nanocrystals keeps the process eco-friendly. GaN has a theoretical capacity of ∼940 mAh/g and a diffusion barrier of ∼80 meV. The properties of GaN nanocrystals and other anode materials are shown in Table 1.

The plurality of GaN nanocrystals 130 are mixed with the first conductive binder binders for coating of the anode current collector layer 110.

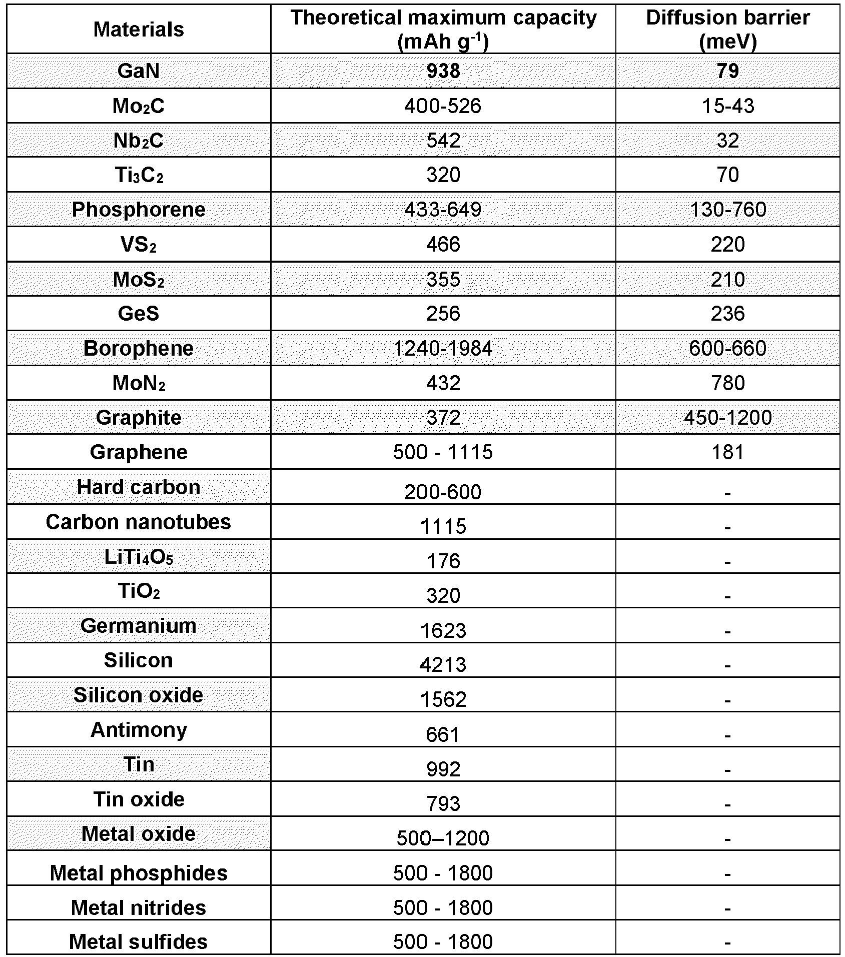

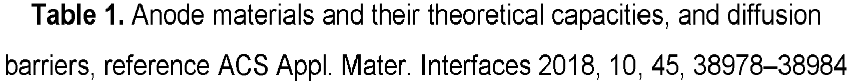

The electrolyte layer 150 is arranged in the anode coating layer 120. That is, the electrolyte layer 150 and the anode coating layer 120 are overlapping. In Fig. 1 the electrolyte layer 150 is illustrated as being arranged in a portion of the anode coating layer 120. It is however understood that the electrolyte layer 150 may be arranged throughout the whole of the anode coating layer 120. The electrolyte layer 150 may be liquid. The electrolyte layer 150 may be trimethyl phosphate. The electrolyte 150 may be lithium salt or sodium salt. The GaN nanocrystals may be immersed in the electrolyte layer 150. The immersion allows for ligation of cations into the GaN nanocrystals 130. It should be understood that the electrolyte layer 150 may have a low Li⁺ or Ni⁺ ionization energy. Such electrolytes are especially good at formation of anion and cations as well as for mobility of cations.

The cathode current collector layer 1100 may comprise one or more of Li4Ti5O12, LiCoO2, LiNi0.8Co0.2O2, LiNi0.8Co0.15Al 0.05O2, LiMn0.5Ni0.5O2, LiMn1/3Ni1/3Co1/3O2, LiMn0.4Ni0.4Co0.2O2 , LiMn2O4, Li1.06Mg0.06Mn1.88O4, LiAlMnO4, LiFePO4, Na0.7CoO2+x, Na0.7MnO2+x , NaFePO4, NaMnPO4, NaVPO4F, NaMO2, NaCoO2, NaFeO2, NaNiO2, NaCrO2, NaVO2, NaTiO2, NaFe1/2Co1/2O2,
NaNi1/3Fe1/3Co1/3O2, NaNi1/3Fe1/3Mn1/3O2, and
NaNi1/4Fe1/4Co1/4Mn1/4O2, NaNi0.68Mn0.22Co0.10O2, NaFePO4, Na2Fe(P2O7)Na4Fe3(PO4)2(P2O7), Na2FePO4F,
Na/Na2[Fe1/2Mn1/2]PO4F, Na3V2(PO4)2F3, Na3V2(PO4)3, Na4Co2.4Mn0.3Ni0.3(PO4)2P2O7, Na1.92Fe2(CN)6. It should be understood that the choice of cathode current collector 1100 material should be selected with respect to the HOMO-LUMO energy gap. The cathode current collector layer 1100 material must be chosen such that the chemical potential µ_{C} lies above the HOMO level.

The cathode current collector layer 1100 may be coated with cathode coating layer 170. The cathode coating layer 170 comprises a plurality of transition metal oxide nanocrystals 180 and a second conductive binder 190. The transition metal oxide nanocrystals 180 may comprise sodium metal oxide or a lithium metal oxide. The transition metal oxide nanocrystals 180 may be anyone of NaVPO4F, NaMO2, NaCoO2, NaFeO2, NaNiO2, NaCrO2, NaVO2, or NaTiO2 or LiNiMnCoO2. The second conductive binder 190 may be a conductive polymer. For example, the second conductive binder may be anyone of trans-polyacetylene, polythiophene, polypyrrole, poly(p-phenylene), polyaniline and poly(p-phenylene vinylene). The second conductive binder may be same or different as compared with the first conductive binder.

The separating layer 160 is arranged to separate the electrolyte layer 150 and the cathode coating layer 170. Hence, the separating layer 160 may be arranged in between the electrolyte layer 150 and the cathode coating layer 170. The separating layer 160 may be a nano-porous block copolymer.

During charging of the battery cell, ions, such as lithium ions, intercalated in the anode travels through the separator and electrolyte to the anode for intercalating into the cathode. The electrons released in the half reaction of the anode, do work in a circuit and returns at the cathode for the intercalation of lithium in the cathode. Ions, such as from lithium [He]2s¹ and sodium [Ne]3s¹, adsorb to the surface of the GaN nanocrystals by transferring part of their valence electron or charge to GaN.

The anode coating layer may be used as a protective layer on top of a graphite anode with a conductive binder mixture. This may prevent excess solid-electrolyte interphase formation upon charging the battery at high power as lithium ions adsorb to the surface of GaN nanocrystals that react with the lithium first. Secondly, the excess lithium intercalate in graphite.

Additionally, variations to the disclosed embodiments can be understood and effected by the skilled person in practicing the claimed invention, from a study of the drawings, the disclosure, and the appended claims.

## Claims

1. A battery cell (100), comprising:
an anode current collector layer (110);
an anode coating layer (120) arranged on the anode current collector layer (110), the anode coating layer (120) comprises a plurality of Gallium Nitride, GaN, nanocrystals (130) and a first conductive binder (140);
an electrolyte layer (150) arranged in the anode coating layer (120); and
a cathode current collector layer (1100).

2. The battery cell according to claim 1, wherein the plurality of GaN nanocrystals (130) have a diameter less than 100 nm.

3. The battery cell according to any of the claims 1 and 2, wherein the plurality of GaN nanocrystals (130) are p-doped.

4. The battery cell according to any of the claims 1 and 2, wherein the plurality of GaN nanocrystals (130) are n-doped.

5. The battery cell according to any of the claims 1-4, wherein the plurality of GaN nanocrystals (130) comprises nanowires which elongate in a C-direction of wurtzite.

6. The battery cell according to any of the claims 1-5, wherein the cathode coating layer (170) comprises sodium metal oxide.

7. The battery cell according to any of the claims 1-6, wherein the cathode coating layer (170) comprises lithium metal oxide.

8. The battery cell according to any of the claims 1-7, wherein the electrolyte layer (150) comprises trimethyl phosphate.

9. The battery cell according to any of the claims 1-8, wherein the electrolyte layer (150) comprises lithium salt.

10. The battery cell according to any of the claims 1-9, wherein the electrolyte layer (150) comprises sodium salt.

11. The battery cell according to any of the claims 1-10, wherein the first conductive binder (140) comprises a conductive polymer, selected from the group comprising trans-polyacetylene, polythiophene, polypyrrole, poly(p-phenylene), polyaniline and poly(p-phenylene vinylene).

12. The battery cell according to any of the claims 1-11, wherein the cathode current collector layer (1100) is coated with a cathode coating layer (170) comprising a plurality of transition metal oxide nanocrystals (180) and a second conductive binder (190).

13. The battery cell according to claim 12, wherein the second conductive binder (190) comprises a conductive polymer, selected from the group comprising trans-polyacetylene, polythiophene, polypyrrole, poly(p-phenylene), polyaniline and poly(p-phenylene vinylene).

14. The battery cell according to any of the claims 12 or 13, further comprising a separating layer (160) arranged inbetween the electrolyte layer (150) and the cathode coating layer (170).

15. The battery cell according to claim 14, wherein the separating layer (160) comprises a nano-porous block copolymer.
